# EUROPEAN PATENT SPECIFICATION

(11) **EP 0 910 551 B1**
(45) Date of publication and mention of the grant of the patent: **06.02.2002**
(21) Application number: 97923302.0
(22) Date of filing: 29.05.1997
(51) Int. Cl.: C02F 1/28, C02F 3/32

(54) **ULTRAPURIFICATION METHOD**
VERFAHREN ZUR ULTRAREINIGUNG VON WASSER
PROCEDE D'ULTRAPURIFICATION

(30) Priority: 30.05.1996 IL 11846796; 11.04.1997 IL 12065297
(43) Date of publication of application: 28.04.1999
(73) Proprietor: THE STATE of ISRAEL Atomic Energy Commission Soreq Nuclear Research Center, Yavne 81800 (IL); YISSUM RESEARCH DEVELOPMENT COMPANY OF THE HEBREW UNIVERSITY OF JERUSALEM, Jerusalem 92 182 (IL)
(72) Inventor: TEL-OR, Elisha, 76965 Rehovot (IL); COHEN, Nava, 42842 Bat Hefer (IL); ZAFRIR, Hovav, 76965 Rehovot (IL); ILZYCER, Danielle, 74021 Ness Ziona (IL); GILATH, Irith, Rehovot 76468 (IL); MEY-MAROM, Abraham, Bat Yam 59371 (IL)
(74) Representative: Le Guen, Gérard
(86) International application number: IL9700172
(87) International publication number: WO9745372

(56) References cited:
- EP-A- 0 333 218
- US-A- 5 000 852
- SELA ET AL.: "The accumulation and the effect of heavy metals on the water fern Azolla Filiculoides." NEW PHYTOL., vol. 112, no. 7, 1989, pages 7-12, XP002041894
- DE WET ET AL.: "bioaccumulation of selected heavy metal by the water fern Azolla filiculoides Lam in a wetland ecosystem .." WATER SA, vol. 16, no. 4, October 1990, pages 281-286, XP002041895

## Description

### FIELD OF THE INVENTION

The present invention relates to the use of the metal ion binding property of the water fern *Azolla* in a method for ultrapurification and in a metal ion sampler.

### BACKGROUND OF THE INVENTION

The removal of metal ion contaminants from aqueous media or waste waters released by various chemical, coating, and nuclear industries, etc., is one of the major problems in environmental protection. Various effluents have to be cleaned up before they can be discarded into open water reservoirs, or released to rivers, sewage or the like. Environmental protection regulations of developed and industrial states generally restrict the content of metal ions in water to the ppb range (µg/Kg). The analysis of liquids containing such low concentration of metal ion contaminants is often limited by the sensitivity and resolution of conventional analytical methods (such as XRF, AAS, ICP and ICP-MS).

U.S. Patent No. 5,000,852 to Tel-Or, discloses means and processes for the reduction of the concentration of transition metals in various aqueous media. The Tel-Or patent utilizes the metal ion-binding capability of the water fern *Azolla* to remove metal ions from aqueous solutions. The *Azolla* was used both in its living state by growing the fern in the contaminated media, as well as in a lifeless state in the form of a column of dried biomass.

Experiments are described in the Tel-Or patent in which solutions containing hundreds of ppm (mg/Kg) of a metal ion were reduced to a few ppm by passing the solution through an *Azolla* biomass column. However, this level of purification is insufficient to meet the stringent environmental standards presently in force in most developed countries. Examples of these standards are given in Table I below:

**Table I:**

| **Examples of limit values of metal concentrations in water (under environmental protection regulations):** | | | |
|---|---|---|---|
| Metals. | Israel Concentration in ppb | Germany Concentration in ppb | Switzerland Concentration in ppb |
| Hg, (Mercury) | 5 | 50 | 10 |
| Mo, (Molybdenum) | 50 | | |
| Cr3+, (Chromium) | 250 | 1000 | 2000 |
| Cr6+, (Chromium) | 100 | 200 | 500 |
| Pb, (Lead) | 250 | 1000 | 500 |
| Cd, (Cadmium) | 50 | 200 | 100 |
| Ni, (Nickel) | 500 | 1000 | 2000 |
| Co, (Cobalt) | 250 | 1000 | 500 |
| Cu, (Copper) | 500 | 1000 | 1000 |
| Ag, (Silver) | 50 | 2000 | 100 |
| Li, (Lithium) | 300 | | |

Furthermore, the initial concentration of the solutions to be purified was in the range of 100-17,000 ppm, while many contaminated liquids contain initial concentrations of <100 ppm. Although other experiments were described in which the initial concentration of metal ion was 20-30 ppm, these experiments involved the living *Azolla*, which binds metal ions by a mechanism different from that of the dried biomass.

The Tel-Or patent does not describe any device which can be used for concentrating metal ions.

### BRIEF SUMMARY OF THE INVENTION

It is an object of the present invention to provide a method for the ultrapurification of aqueous solutions from heavy metal ions to a degree which at least meets environmental regulation requirements.

It is a further object of the present invention to provide a device which can qualitatively and/or quantitatively determine the presence of heavy metal ions in an aqueous solution, even when these ions are at a very low concentration and/or are mixed with other types of ions or contaminants.

According to one aspect of the present invention, there is provided a method for the ultrapurification of an aqueous solution from a heavy metal ion comprising passing said solution through a dried biomass of the water fern *Azolla* as defined in claim 1.

Further aspects of the invention are defined in claims 8 and 9.

In a preferred embodiment of the present invention, the biomass is contained in a column.

In the present specification, *"ultrapurification*"refers to the purification of a contaminated solution to a level of contaminant which is much less than 1 ppm, and generally in the range of ppb, ppt, or lower i.e. an ultrapure solution.

The present invention is based on the surprising discovery that a lifeless *Azolla* biomass is capable of binding not only transition metals, as described in the Tel-Or patent, but also all heavy metal ions including Cs, Sr, Ce and Zr. Furthermore, *Azolla* biomass has been found capable of binding metal ions in aqueous solutions in a concentration range of up to nine orders of magnitude, from hundreds of ppm's to much less than one ppt (ng/Kg), limited only by the saturation of the amount of biomass used. This results in the ultrapurification of the contaminated solution to within a concentration range allowed by environmental authorities.

In living water fern *Azolla,* the metal absorption and uptake processes are diffusion and metabolic processes, respectively. The absorption process for all the metals first takes place in the fern roots. Most of the metals accumulate in the roots while some of the metals are translocated to the shoot and the leaves. The metal translocation to the shoot and leaves is limited by the defense system of the plant.

In dry biomass *Azolla*, on the other hand, the metal accumulation and binding is a pure chemical, mainly ion exchange process. The metal accumulation is at least 7 fold greater than for the living *Azolla.* The metal accumulation in living *Azolla* is a slow process, lasting for hours and days, while for dry *Azolla* the accumulation process takes place practically instantly.

Thus, the *Azolla* biomass has been found to be superior in at least five aspects: (1) the range of ions which can be bound; (2) the specificity of ion-binding; (3) the ability to bind ions at very low concentrations; (4) the ability to produce ultrapure solutions; and (5) the ability to concentrate heavy metal ions up to three orders of magnitude.

Due to the superior properties of the *Azolla* biomass, it has been possible to prepare a sampler which specifically binds and concentrates heavy metal ions from a contaminated aqueous solution. This allows the determination and quantification of a heavy metal ion in a body of water even at very low concentrations which are below the measuring range of conventional measuring methods. Furthermore, the specificity of binding of the *Azolla* biomass allows binding of heavy metal ions even in the presence of high concentrations of other ions and contaminants which generally saturate conventional binding resins.

### BRIEF DESCRIPTION OF THE DRAWINGS

Figure 1 illustrates one embodiment of a bag sampler.
Figure 2 illustrates one embodiment of a column sampler.
Figure 3 illustrates one embodiment of a funnel sampler.
Figure 4 illustrates one embodiment of a flat sampler.
Figure 5 illustrates one embodiment of a chain of flat samplers.

### DETAILED DESCRIPTION OF PREFERRED EMBODIMENTS

### I. Methods

### a) Based on ICP analysis

A 15 cm length and 1 cm diameter column is filled with 2 g of crumbled and rehydrated *Azolla*. A water solution containing the metal ion at a known concentration is pumped through the column at an optimal selected and constant flow rate. Volume fractions of the column effluent are collected in vials at specific time intervals during the entire procedure. The concentration of the metal ion in the initial solution and in the effluent volume fractions are analyzed by induced coupled plasma (ICP). The metal ion concentration of the final solution is determined from the ICP results of the effluent volume fractions analysis. The percentage of metal ion removal is calculated from the initial and final metal ion concentrations.

### b) Based on radiological analysis

A 15 cm length and 1.5 cm diameter column is filled with 5 g of crumbled and rehydrated *Azolla*. A water solution containing a known concentration of the metal ion, which has been irradiated by neutrons inside a nuclear reactor core and serves as a radioactive emitter isotope, is pumped through the column at a pre-selected and constant flow rate. The column effluent is collected in a jar. The radioactivity of the metal ion isotope, in the initial solution, in the final solution and in the *Azolla* column, is measured by γ-spectrometry. The concentration of the metal ion in the initial solution, the final solution and the *Azolla* column is calculated from the radiological measurements. The percentage of ion metal removal is calculated from the initial and final ion metal concentrations.

### II. Azolla material

The *Azolla* water fern includes a variety of species including *Azolla filiculoides, Azolla pinnata, Azolla imbricata, Azolla africana, Azolla caroliniana, Azolla mexicana, Azolla nilotica, Azolla microphyla, Azolla rubra* and *Azolla japonica. Azolla* dried biomass generally consists of dry or rehydrated dried Azolla, dry or rehydrated crumbled dried Azolla, or dry or rehydrated powdered dried Azolla. Thus, *Azolla* biomass does not contain living material.

### III. Results

*Azolla* biomass has been found to take up heavy metals ions such as Cu, Zn, Ni, Cr, Pb, Cd, U, Cs, Ce, Ru, Sr, Zr, Ag and Au over a broad range of pH values, from pH = 2 up to pH = 11. Solutions of the above metal ions can be passed through columns of *Azolla* biomass. Preferably, *Azolla* biomass is inserted in columns of miscellaneous sizes (diameters and lengths). Small sized columns can be used for small and medium volume solutions, while larger sized columns can be used for large volume solutions.

As much as 99.9 % of the initial metal concentration can be removed from the solution, reducing the metal ion content in the contaminated solution by up to 3 orders of magnitude. A number of examples follow:

**Table II:**

| **Uptake of some heavy metal ions by column of crumbled rehydrated Azolla dried biomass in a single pass (small vol. of solution)** | | | | | | |
|---|---|---|---|---|---|---|
| **Heavy Metal Ion** | **Volume of Sol. (ml.)** | **pH** | **Biomass amount (grams)** | **Initial solution conc.** | **Final solution conc.** | **% Removal** |
| **Strontium** | 1200 | 7 | 2 | 1 ppm | 8 ppb | 99.2 |
| | 1200 | 7 | 2 | 5 ppm | 10 ppb | 99.8 |
| | 1000 | 7 | 2 | 10 ppm | 14 ppb | 99.9 |
| | 500 | 10 | 2 | 47 ppm | 50 ppb | 99.9 |
| **Zirconium** | 1000 | 2 | 5 | 5 ppm | 400 ppb | 92 |
| **Uranium** | 600 | 4.5 | 2 | 5 ppm | 61 ppb | 98.8 |
| | 500 | 2.4 | 2 | 10 ppm | 200 ppb | 98.0 |
| **Lead** | 1400 | 7 | 2 | 100 ppm | 30 ppm | 99.97 |
| **Cesium** | 1250 | 7 | 5 | 1 ppb | 20 ppt | 98 |
| | 1175 | 10.5 | 5 | 100 ppb | 200 ppt | 99.8 |
| | 1080 | 10.5 | 5 | 5 ppm | 7.5 ppb | 99.8 |

Column size for 2 gram Azolla biomass: 1 cm diameter and 15 cm length
Column size for 5 gram Azolla biomass: 1.5 cm diameter and 15 cm length

**Table III:**

| **Uptake of some heavy metal ions by column of crumbled rehydrated Azolla dried biomass in a single pass (large vol. of solution)** | | | | | | |
|---|---|---|---|---|---|---|
| **Heavy Metal Ion** | **Volume of Sol. (Liters)** | **pH** | **Biomass amount (Kg.)** | **Initial solution conc.** | **Final solution conc.** | **% Removal** |
| **Lead** | 1000 | 7 | 2.4 | 120 ppb | 10 ppb | 91.7 |
| | 1000 | 7 | 2.4 | 1 ppm | 14 ppb | 98.6 |
| | 1000 | 7 | 2.4 | 3.5 ppm | 7 ppb | 99.8 |
| | | | | | | |

Column size: 20 cm diameter and 60 cm length

**Table IV:**

| **Uptake of some heavy metal ions by column of rehydrated Azolla dried biomass in a single pass (large volume of solution)** | | | | | | |
|---|---|---|---|---|---|---|
| **Heavy Metal Ion** | **Volume of Sol. (Liters)** | **pH** | **Biomass amount (Kg.)** | **Initial solution conc.** | **Final solution conc.** | **% Removal** |
| **Lead** | 1000 | 7 | 2.4 | 500 ppb | 10 ppb | 98 |
| | 1000 | 7 | 2.4 | 1 ppm | 11 ppb | 98.9 |
| | 1000 | 7 | 2.4 | 5 ppm | 12 ppb | 99.8 |

Column size: 20 cm diameter and 60 cm length

In all the above experiments, strontium, zirconium, uranium and lead were measured by the ICP method; cesium was measured by the radiological method.

*Azolla* biomass provides an inexpensive means of high purification of waste or contaminated waters as a stand alone method or in complement of other purification techniques which cannot reach such ultrapurification levels.

*Azolla* biomass can also be used as part of a reclamation process of potable water. Radioactive isotopes are usually present in radioactive waste water at very low metal ion concentrations, below the environmental standards regulation. However, in the nuclear industry, the sources of radioactive isotopes are mostly fission products having a high specific radioactivity and are considered to be hazardous to the environment. These radioactive isotopes have to be removed from the waste solutions to a radioactivity level below, or at the most equal to, the natural radioactivity level, before discharge into the environment. *Azolla* biomass can be used for clean up of radioactive liquid wastes of very low metal ions concentration, but of high radioactivity level. After metal take up, *Azolla* biomass can be incinerated reducing considerably the waste volume for further disposal.

A sampler enables the determination of very low concentrations of heavy metal ions in water, for which conventional analytical methods are not sensitive enough. The sampler is based on the property of *Azolla* to bind and concentrate heavy metal ions such as Cu, Zn, Ni, Cr, Pb, Cd, U, Cs, Ce, Ru, Sr, Zr, Ag and Au by up to three order of magnitude from water which flows through the sampler.

The *Azolla* uptake of metal ions results in an enrichment of the metal ions in the biomass by several orders of magnitude (concentration factor above 1000), over a broad range of pH values, from pH = 2 up to pH = 11. The *Azolla* can bind the ions even at very low concentrations, i.e. <1 ppm. This enables the analysis of water composition and content for metal ions using conventional analytical methods which were not sensitive enough to allow the metal ion determination directly from water samples, due to their low concentration. Thus, metal ion concentration in an *Azolla* biomass sampler avoids lengthy and sensitive preconcentration methods which deal with large volume of solutions.

The *Azolla* sampler is calibrated by flowing standard solutions through the sampler to determine the specific factor concentration of each metal ion to be sampled. A known volume of solution to be analyzed is flowed through the *Azolla* sampler. After completion of the sampling, the *Azolla* bound metals ions are released by acid elution, by acid digestion, or by incineration of the biomass. The biomass incineration is followed by acid digestion of the resulting ashes for qualitative and quantitative analysis by conventional analytical methods. The metal ion concentrations in the solution are calculated using the calibration results.

A further advantage of using *Azolla* for concentrating ions is its specificity for heavy metal ions. Other sampling methods bind many types of ions and contaminants leading to early saturation of the resin and interference with the binding of the ion whose concentration is to be determined. *Azolla*, on the other hand, binds heavy metal ions almost exclusively even in the presence of high concentrations of other ions.

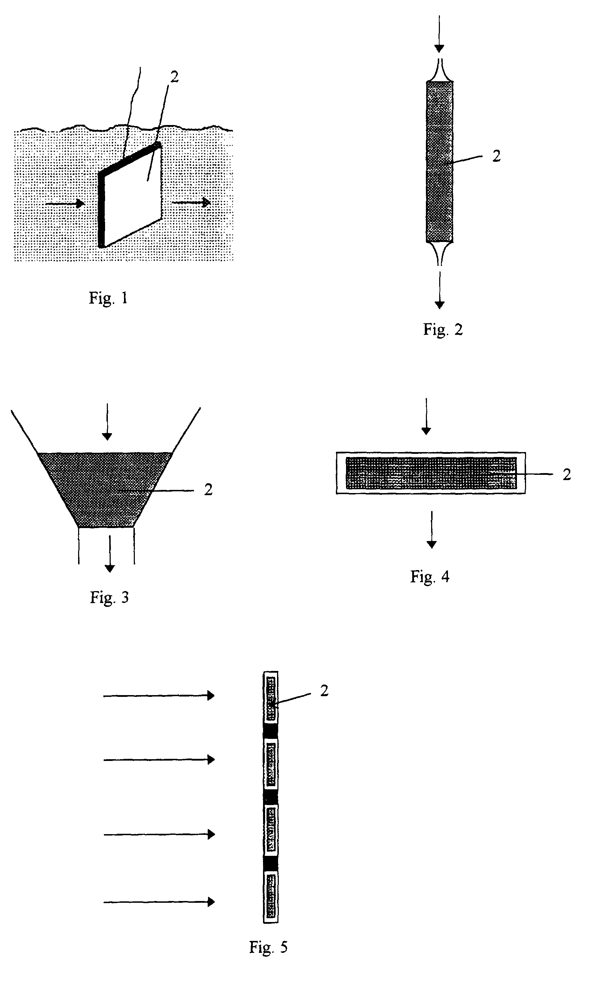

The sampler comprises dry or rehydrated *Azolla* biomass which is inserted into receptacles of various forms: columns, small bags, funnel form filters and flat filters. Representative samplers are illustrated in figures 1-5, in which the *Azolla* biomass is denoted by the numeral 2 and the direction of the water stream is indicated by the arrows.

The above samplers can be utilized in laboratories and *in situ* for sampling of natural standing waters, natural streaming waters, or forced streaming waters using means like pumps. The sampler can be used both qualitatively, to determine the presence of an ion, as well as quantitatively, to determine the concentration of an ion in a body of water by calculation of the volume of water passing through the sampler. A chain of samplers can be prepared to analyze metal ion concentration in natural water at different depths.

Once the metal ions are bound to Azolla biomass in the sampler and the sampling is completed, the metal ions are released from the sampler by acid elution or acid digestion for subsequent analysis by conventional analytical methods. For water or solutions containing γ-emitting radioactive metal ions, the elution or digestion process may be omitted and the sampler is analyzed using conventional nuclear spectroscopic analytical methods. An example follows:

**Table V:**

| **Concentration on Azolla biomass of some heavy metals of very low contents in water** | | | | | | |
|---|---|---|---|---|---|---|
| **Heavy Metal Ion** | **Volume of Sol. (ml.)** | **pH** | **Biomass amount (grams)** | **Initial Conc. in solution A z o l l a conc. biomass** | | **Conc. factor** |
| **Strontium** | 1200 | 7 | 2 | 1 ppm | 595 ppm | 595 |
| **Zirconium** | 700 | 4.3 | 2 | 1 ppm | 173 ppm | 173 |
| **Uranium** | 600 | 4.5 | 2 | 5 ppm | 1480 ppm | 296 |
| **Lead** | 1000 | 7 | 2 | 1 ppm | 500 ppm | 500 |
| **Cesium** | 1250 | 7 | 5 | 1 ppb | 245 ppb | 245 |
| | 8500 | 7 | 5 | 100 ppt | 167 ppb | 1670 |
| **Chromium** | 3000 | 7 | 2 | 140 ppb | 205 ppm | 1468 |
| | 3000 | 5 | 2 | 345 ppb | 484 ppm | 1404 |
| **Ruthenium** | 1300 | 5.3 | 5 | 100 ppb | 20 ppm | 200 |
| | 9000 | 6.8 | 5 | 100 ppt | 115 ppb | 1150 |

While the present invention has been described in terms of several preferred embodiments, it is expected that various modifications and improvements will occur to those skilled in the art upon consideration of this disclosure.

The scope of the invention is not to be construed as limited by the illustrative embodiments set forth herein, but is to be determined in accordance with the appended claims.

## Claims

1. A method for the ultrapurification from a heavy metal ion of an aqueous solution containing said heavy metal ion, the initial concentration of said heavy metal ion being < 100 ppm, comprising pumping said solution at a constant flow rate through a dried biomass of the water fern *Azolla*.

2. A method according to claim 1 wherein said biomass is contained in a column.

3. A method according to either of claims 1 or 2 wherein said heavy metal ion is selected from the group consisting of Cu, Zn, Ni, Cr, Pb, Cd, U, Cs, Ce, Ru, Sr, Zr, Ag and Au.

4. A method according to any of claims 1-3 wherein said *Azolla* is selected from the group consisting of the species *Azolla filiculoides, Azolla pinnata, Azolla imbricata, Azolla africana, Azolla caroliniana, Azolla mexicana, Azolla nilotica, Azolla microphyla, Azolla rubra* and *Azolla japonica.*

5. A method according to any of claims 1-4 wherein the pH of said solution is in the range of 2-11.

6. A method according to any of claims 1-5 wherein the concentration of said heavy metal ion in said solution is reduced to < 100 ppb.

7. A method according to any of claims 1-6 wherein said dried biomass is selected from the group consisting of dry or rehydrated dried *Azolla*, dry or rehydrated crumbled dried *Azolla*, and dry or rehydrated powdered dried *Azolla*.

8. A process for the reclamation of water contaminated by a heavy metal ion to produce potable water, the initial concentration of said heavy metal ion being < 100 ppm, comprising purifying said contaminated water by pumping said contaminated water at a constant flow rate through a dried biomass of the water fem *Azolla*.

9. A process for the purification of liquid waste contaminated by a radioactive heavy metal ion, the initial concentration of said heavy metal ion being < 100 ppm, comprising pumping said liquid waste at a constant flow rate through a dried biomass of the water fern *Azolla*.

10. A process according to claim 9 wherein said biomass is incinerated after said waste has been passed through it.

## Patentansprüche

1. Verfahren für die hochgradige Reinigung eines Schwermetallions einer das Schwermetallion enthaltenden wäßrigen Lösung, wobei die Anfangskonzentration des Schwermetallions < 100 ppm beträgt, aufweisend Pumpen der Lösung bei einer konstanten Strömungsgeschwindigkeit durch eine getrocknete Biomasse des Wasserfarns *Azolla*.

2. Verfahren gemäß Anspruch 1, wobei die Biomasse in einer Säule enthalten ist.

3. Verfahren gemäß einem der Ansprüche 1 oder 2, wobei das Schwermetall aus der Gruppe ausgewählt ist, die aus Cu, Zn, Ni, Cr, Pb, Cd, U, Cs, Ce, Ru, Sr, Zr, Ag und Au besteht.

4. Verfahren gemäß einem der Ansprüche 1-3, wobei das *Azolla* aus der Gruppe ausgewählt ist, die aus den Spezies *Azolla filiculoides, Azolla pinnata, Azolla imbricata, Azolla africana, Azolla caroliniana, Azolla mexicana, Azolla nilotica, Azolla microphyla, Azolla rubra und Azolla japonica* besteht.

5. Verfahren gemäß einem der Ansprüche 1-4, wobei der pH-Wert der Lösung in dem Bereich von 2-11 liegt.

6. Verfahren gemäß einem der Ansprüche 1-5, wobei die Konzentration des Schwermetallions in der Lösung auf < 100 ppb reduziert wird.

7. Verfahren gemäß einem der Ansprüche 1-6, wobei die getrocknete Biomasse aus der Gruppe ausgewählt ist, die aus trockenem oder wiederhydriert-getrocknetem *Azolla*, getrocknetem oder wiederhydriertem, zerbröckelt-getrocknetem *Azolla*, und getrocknetem oder wiederhydriertem, gepulvert-getrocknetem *Azolla* besteht.

8. Verfahren für die Wiedergewinnung von Wasser, die mit einem Schwermetallion verunreinigt ist, um Trinkwasser herzustellen, wobei die Anfangskonzentration des Schwermetallions < 100 ppm beträgt, aufweisend Reinigen des verunreinigten Wassers durch Pumpen des verunreinigten Wassers bei einer konstanten Strömungsgeschwindigkeit durch eine getrocknete Biomasse des Wasserfarns *Azolla*.

9. Verfahren für die Reinigung von flüssigem Abfall, die durch ein radioaktives Schwermetallion verunreinigt ist, wobei die Anfangskonzentration des Schwermetallions < 100 ppm beträgt, aufweisend Pumpen des flüssigen Abfalls bei einer konstanten Strömungsgeschwindigkeit durch eine getrocknete Biomasse des Wasserfarns *Azolla*.

10. Verfahren gemäß Anspruch 9, wobei die Biomasse verbrannt wird, nachdem der flüssige Abfall dadurch geleitet worden ist.

## Revendications

1. Procédé d'ultrapurification d'un ion d'un métal lourd d'une solution aqueuse contenant ledit ion d'un métal lourd , la concentration initiale dudit ion d'un métal lourd étant <100 ppm, comprenant le pompage de ladite solution à un débit constant par le biais d'une biomasse séchée de la fougère aquatique *Azolla*.

2. Procédé selon la revendication 1, dans lequel ladite biomasse est contenue dans une colonne.

3. Procédé selon l'une ou l'autre des revendications 1 ou 2, dans lequel ledit ion de métal lourd est choisi parmi le groupe constitué de Cu, Zn, Ni, Cr, Pb, Cd, U, Cs, Ce, Ru, Sr, Zr, Ag et Au.

4. Procédé selon l'une quelconque des revendications 1 à 3, dans lequel ladite *Azolla* est choisie parmi le groupe constitué des espèces *Azolla filiculoides, Azolla pinnata, Azolla imbricata, Azolla africana, Azolla caroliniana, Azolla mexicana, Azolla nilotica, Azolla microphyla, Azolla rubra* et *Azolla japonica.*

5. Procédé selon l'une quelconque des revendications 1 à 4, dans lequel le PH de ladite solution se situe dans la fourchette 2-11.

6. Procédé selon l'une quelconque des revendications 1 à 5, dans lequel la concentration dudit ion de métal lourd dans ladite solution est réduite à < 100 ppb.

7. Procédé selon l'une quelconque des revendications 1 à 6, dans lequel ladite biomasse séchée est choisie parmi le groupe constitué d'*Azolla* sèche ou séchée réhydratée, d'*Azolla* sèche ou séchée réhydratée et concassée, et d'*Azolla* sèche ou séchée réhydratée et réduite en poudre.

8. Procédé de remise en valeur de l'eau contaminée par un ion de métal lourd pour produire de l'eau potable, la concentration initiale dudit ion de métal lourd étant <100 ppm, comprenant la purification de ladite eau contaminée par le pompage de ladite eau contaminée à un débit constant par le biais d'une biomasse séchée de fougère aquatique *Azolla*.

9. Procédé de purification de déchets liquides contaminés par un ion de métal lourd radioactif, la concentration initiale dudit ion de méta¹ lourd étant <100 ppm, comprenant le pompage desdits déchets liquides à un débit constant par le biais d'une biomasse séchée de fougère aquatique *Azolla*.

10. Procédé selon la revendication 9, dans lequel ladite biomasse est incinérée après avoir filtré lesdits déchets.
